# EUROPEAN PATENT APPLICATION

(11) **EP 4 596 752 A1**
(43) Date of publication of application: **06.08.2025**
(21) Application number: 23872039.5
(22) Date of filing: 19.09.2023
(51) Int. Cl.: C23F 11/00, B23D 15/00, C23C 2/06, C23C 2/26, C23C 28/00, E01F 15/04

(54) **CUT-PROCESSED PRODUCT AND GUARDRAIL**

(30) Priority: 29.09.2022 JP 2022157062
(71) Applicant: NIPPON STEEL CORPORATION, Chiyoda-ku Tokyo 100-8071 (JP)
(72) Inventor: HAYASHIDA, Takahide, Tokyo 100-8071 (JP)
(74) Representative: Vossius & Partner Patentanwälte Rechtsanwälte mbB
(86) International application number: PCT/JP2023/033915
(87) International publication number: WO 2024/070811

(57) **Abstract**

A cut-and-processed product of a Zn-Al-Mg-based plated steel material including a base steel material and a Zn-Al-Mg-based plating layer covering a surface of the base steel material, in which a cut end surface of the cut-and-processed product is covered with the Zn-Al-Mg-based plating layer at a coverage of from 50 to 99% with respect to the cut end surface, a non-plated surface of the base steel material and the Zn-Al-Mg-based plating layer around the non-plated surface, in the cut end surface of the cut-and-processed product, are covered with a repair coat, an initial coat resistivity is from 10 to 1000 Ω/cm² and a coat resistivity after immersion of the cut-and-processed product in 5% by mass salt water for 3 hours is from 5 to 50 Ω/cm², in the repair coat, and a thickness of the repair coat is 10 µm or more, as well as a guardrail utilizing the cut-and-processed product.

## Description

### Technical Field

The present disclosure relates to a cut-and-processed product and a guardrail.

### Background Art

In a case in which plated steel materials are processed into shapes of products, such plated steel materials are cut, and steel basis materials of such steel materials are exposed on some of the cut cross sections. Cut end surfaces not covered with plating layers are lowered in corrosion resistance, and thus such cut end surfaces are required to be increased in corrosion resistance.

Various processing methods and techniques are studied for an enhancement in corrosion resistance of cut end surfaces of plated steel materials. For example, rust-proof processing techniques of cut end surfaces, such as a method of processing an inclined end surface (for example, Patent Literature 1), a slit processing method (for example, Patent Literature 2), and a laser cutting method (for example, Patent Literature 3) are known, in which large portions as compared with end cross surfaces by conventional shirring are covered with plating layers.

It is difficult to cover the entire surfaces of cut cross sections with plating layers, and there is a problem that red rust occurs on some of the exposed cut end surfaces, for example, during the early stage of exposure.

A common conventional corrosion-proof technique of a cut end surface is to apply paint for repair, containing a Zn-based metal powder (for example, Patent Literature 4), to a steel-exposed surface of a cut end surface.

[Patent Literature 1] Japanese Patent Application Laid-Open (JP-A) No. 2020-32437
[Patent Literature 2] JP-A No. 2017-192989
[Patent Literature 3] JP-A No. 2021-087988
[Patent Literature 4] JP-A No. 2017-122186

### SUMMARY OF INVENTION

### Technical Problem

A combination of a rust-proof processing technique of a cut end surface and paint application, as described above, has been expected to be capable of providing higher corrosion resistance to a cut end surface.

However, the area of a steel basis material of a steel material serving as a cathode is remarkably smaller than that of a plating layer serving as an anode, on a cut end surface, whereby the reduction reaction of water or oxygen collectively occurs, and causes cathode peeling of a repair coat, and thus sufficient corrosion resistance cannot be retained particularly for suppression for red rust resistance during the early stage of corrosion.

Furthermore, cathode peeling of a repair coat occurs, whereby long-term corrosion resistance cannot also be achieved at an expected level.

An object of the disclosure is to provide a cut-and-processed product that is suppressed in cathode peeling of a repair coat and that has excellent corrosion resistance of a cut end surface from the early stage to the long term, and a guardrail utilizing the cut-and-processed product.

### Solution to Problem

Solutions for solving the above problems include the following aspects.
<1> A cut-and-processed product of a Zn-Al-Mg-based plated steel material including a base steel material and a Zn-Al-Mg-based plating layer covering a surface of the base steel material, wherein
   a cut end surface of the cut-and-processed product is covered with the Zn-Al-Mg-based plating layer at a coverage of from 50 to 99% with respect to the cut end surface,
   a non-plated surface of the base steel material and the Zn-Al-Mg-based plating layer around the non-plated surface, in the cut end surface of the cut-and-processed product, are covered with a repair coat,
   an initial coat resistivity R1 is from 10 to 1000 Ω/cm² and a coat resistivity R2 after immersion of the cut-and-processed product in 5% by mass salt water for 3 hours is from 5 to 50 Ω/cm², in the repair coat, and
   a thickness of the repair coat is 10 µm or more.
<2> The cut-and-processed product according to <1>, wherein the repair coat includes a Zn-based metal powder and a binder resin.
<3> The cut-and-processed product according to <1> or <2>, wherein
   the cut end surface of the cut-and-processed product has
      a first inclined surface that includes a first sag surface continued from a first surface of the cut-and-processed product and a first shear surface continued from the first sag surface, and that is inclined from the first surface of the cut-and-processed product toward a center in a sheet thickness direction,
      a second inclined surface that includes a second sag surface continued from a second surface of the cut-and-processed product and a second shear surface continued from the second sag surface, and that is inclined from the second surface of the cut-and-processed product toward the center in the sheet thickness direction, and
      a fracture surface formed between the first inclined surface and the second inclined surface,
   at least one portion of the base steel material located on the first inclined surface and the second inclined surface, in the cut end surface of the cut-and-processed product, is covered with the Zn-Al-Mg-based plating layer, and
   a non-plated surface of the base steel material including the fracture surface and the Zn-Al-Mg-based plating layer around the non-plated surface, in the cut end surface of the cut-and-processed product, are covered with the repair coat.
<4> The cut-and-processed product according to <1> or <2>, wherein
   the cut end surface of the cut-and-processed product has
      a side surface that includes a sag surface continued from a first surface of the cut-and-processed product and a shear surface continued from the sag surface, and that is inclined along a sheet thickness direction or from the first surface of the cut-and-processed product toward a center, and
      a fracture surface that is continued from the side surface and reaches a second surface of the cut-and-processed product,
   at least one portion of the base steel material located on the side surface, in the cut end surface of the cut-and-processed product, is covered with the Zn-Al-Mg-based plating layer, and
   a non-plated surface of the base steel material including the fracture surface and the Zn-Al-Mg-based plating layer around the non-plated surface, in the cut end surface of the cut-and-processed product, are covered with the repair coat.
<5> The cut-and-processed product according to any one of <1> to <4>, wherein the initial coat resistivity R1 in the repair coat is from 300 to 500 Ω/cm²
<6> The cut-and-processed product according to any one of <1> to <5>, wherein the coat resistivity R2 after immersion in the repair coat is from 10 to 45 Ω/cm²
<7> The cut-and-processed product according to <2>, wherein the Zn-based metal powder includes Zn and Al.
<8> The cut-and-processed product according to <7>, wherein a content of Al with respect to Zn in the Zn-based metal powder including Zn and Al is from 20 to 45% by mass.
<9> The cut-and-processed product according to <7>, wherein a content of Al with respect to Zn in the Zn-based metal powder including Zn and Al is from 28 to 34% by mass.
<10> The cut-and-processed product according to <2>, <7>, <8> or <9>, wherein a content ratio of the Zn-based metal powder with respect to the entire repair coat is from 60 to 80% by mass the metal powder.
<11> The cut-and-processed product according to any one of <2>, or <7> to <10>, wherein the binder resin is at least one selected from the group consisting of a polystyrene resin and an epoxy resin.
<12> A guardrail including the cut-and-processed product according to any one of <1> to <11>.

### Advantageous Effects of Invention

According to the disclosure, it is possible to provide a cut-and-processed product that is suppressed in cathode peeling of a repair coat and that has excellent corrosion resistance of a cut end surface from the early stage to the long term, and a guardrail utilizing the cut-and-processed product.

### BRIEF DESCRIPTION OF DRAWINGS

[FIG. 1] A schematic cross-sectional view illustrating a cut-and-processed product 101 according to a first embodiment of the disclosure.
[FIG. 2] A schematic diagram for describing a method of producing the cut-and-processed product 101 according to the first embodiment of the disclosure.
[FIG. 3] A schematic cross-sectional view illustrating a cut-and-processed product 101 according to a second embodiment of the disclosure.
[FIG. 4] A schematic diagram for describing a method of producing the cut-and-processed product 101 according to the second embodiment of the disclosure.
[FIG. 5] A schematic cross-sectional view illustrating a cut-and-processed product 101 according to a third embodiment of the disclosure.
[FIG. 6] A schematic diagram for describing a method of producing the cut-and-processed product 101 according to the third embodiment of the disclosure.
[FIG. 7] A schematic diagram for describing a specimen for coat resistivity measurement.

### DESCRIPTION OF EMBODIMENTS

Hereinafter, one example of a paint-coated steel sheet of the disclosure is described.

A numerical value range herein represented with "(from) ... to ..." in the description means a range including respective numerical values described before and after "to" as a lower limit and an upper limit, respectively.

The upper limit value or the lower limit value described with respect to a certain numerical value range as a numerical value range described stepwise may be replaced with the upper limit value or the lower limit value of other numerical value range described stepwise.

The upper limit value or the lower limit value described with respect to a certain numerical value range as a numerical value range may be replaced with respective values indicated in Examples.

The term "step" encompasses not only an independent step, but also a step that can achieve a predetermined object even in the case of being not clearly distinguished from other steps.

A "combination of preferred aspects" is a more preferred aspect.

In the description, the "Zn-Al-Mg-based plating layer" is also referred to as "plating layer".

The "Zn-Al-Mg-based plated steel material" is also referred to as "plated steel material".

The "non-plated surface" indicates a surface of a base steel material of a plated steel material, in which the surface is not covered with a Zn-Al-Mg-based plating layer.

The cut-and-processed product of the disclosure is a cut-and-processed product of a Zn-Al-Mg-based plated steel material including a base steel material and a Zn-Al-Mg-based plating layer covering a surface of the base steel material.

The cut end surface of the cut-and-processed product is covered with the Zn-Al-Mg-based plating layer at a coverage of from 50 to 99% with respect to the cut end surface, and a non-plated surface of the base steel material and the Zn-Al-Mg-based plating layer around the non-plated surface, in the cut end surface of the cut-and-processed product, are covered with a repair coat.

The initial coat resistivity is from 10 to 1000 Ω/cm² and the coat resistivity after immersion of the cut-and-processed product in 5% by mass salt water for 3 hours (hereinafter, also referred to as "coat resistivity after immersion in salt water") is from 5 to 50 Ω/cm², in the repair coat.

The thickness of the repair coat is 10 µm or more.

In the cut-and-processed product of the disclosure, not only from 50 to 99% of the cut end surface of the cut-and-processed product is covered with the Zn-Al-Mg-based plating layer, but also the non-plated surface of the cut end surface and the plating layer around the non-plated surface is covered with a repair coat having the above resistivity characteristics.

Such a configuration allows cathode peeling of the repair coat to be suppressed and allows a reduction in corrosion resistance at the early stage of corrosion to be suppressed.

Additionally, high corrosion resistance is kept from the early stage of corrosion to the long-term corrosion by the sacrificial corrosion-proof effect with a component of the Zn-Al-Mg-based plating layer and a component of the repair coat.

Therefore, the cut-and-processed product of the disclosure is suppressed in cathode peeling of the repair coat and has excellent corrosion resistance of the cut end surface from the early stage to the long term.

The detail of the cut-and-processed product of the disclosure is described.

### (Plate Steel Material)

The plated steel material is an objective steel material capable of being cut and processed.

The plated steel material is a Zn-Al-Mg-based plated steel material having a base steel material and a plating layer covering a surface of the base steel material. Specifically, the plated steel material favorably has a plating layer on each of both surfaces of the base steel material.

The base steel material is an objective steel material on which a plating layer is to be formed.

The base steel material is not particularly limited. Examples of the base steel material include an extremely low C type (structure essentially consisting of ferrite), Al-k type (structure including perlite in ferrite), two-phase structure type (for example, structure including martensite in ferrite, structure including bainite in ferrite), strain induced transformation type (structure including residual austenite in ferrite), or fine crystal type (structure essentially consisting of ferrite) steel sheet.

The plating layer is a plating layer that is a Zn-Al-Mg-based plating layer and that includes at least zinc, aluminum, and magnesium. The Zn-Al-Mg-based plating layer contains Al and Mg and thus has high corrosion resistance as compared with a Zn plating layer or an Al plating layer.

Examples of the plating layer include, in addition to a zinc-aluminum-magnesium plating layer, a well-known Zn-Al-Mg-based plating layer such as a zinc-aluminum-magnesium-tin plating layer, a zinc-aluminum-magnesium-silicon plating layer, or a zinc-aluminum-magnesium-tin-silicon plating layer.

Examples of the plating layer also include a plating layer containing, as a dissimilar metal element or an impurity, cobalt, molybdenum, tungsten, nickel, titanium, chromium, iron, magnesium, lead, bismuth, antimony, tin, copper, cadmium, or arsenicum.

In particular, a zinc-based plating layer is preferably a plating layer containing aluminum or a plating layer containing aluminum and magnesium, in addition to zinc, from the viewpoint of corrosion resistance. In other words, a zinc alloy-plated steel sheet is preferably used as an original sheet because the zinc alloy-plated steel sheet achieves more excellent corrosion resistance than a zinc-plated steel sheet.

Specific examples of the plating layer can include a plating layer including Zn: 65.0%, Al: from 5.0% to 25.0%, and Mg: from 2.0% to 12.5% on the mass ratio.

More specific examples of the plating layer include a plating layer having a chemical composition including, in terms of percentage by mass,
Zn: 65.0%,
Al: from 5.0% to 25.0%,
Mg: from 2.0% to 12.5%,
Sn: from 0% to 20.0%,
Bi: from 0% to 5.0%,
In: from 0% to 2.0%,
Ca: from 0% to 3.00%,
Y: from 0% to 0.5%,
La: from 0% to 0.5%,
Ce: from 0% to 0.5%,
Si: from 0% to 2.5%,
Cr: from 0% to 0.25%,
Ti: from 0% to 0.25%,
Zr: from 0% to 0.25%,
Mo: from 0% to 0.25%,
W: from 0% to 0.25%,
Ag: from 0% to 0.25%,
P: from 0% to 0.25%,
Ni: from 0% to 0.25%,
Co: from 0% to 0.25%,
V: from 0% to 0.25%,
Nb: from 0% to 0.25%,
Cu: from 0% to 0.25%,
Mn: from 0% to 0.25%,
Li: from 0% to 0.25%,
Na: from 0% to 0.25%,
K: from 0% to 0.25%,
Fe: from 0% to 5.0%,
Sr: from 0% to 0.5%,
Sb: from 0% to 0.5%,
Pb: from 0% to 0.5%,
B: from 0% to 0.5%, and
impurities.

The method of forming the plating layer is not particularly limited and may be any known method such as an electroplating method, a hot-dip plating method, a deposition plating method, a dispersion plating method, or a vacuum plating method.

The amount of attachment of the plating layer is not particularly limited, and is preferably from 15 g·m⁻² to 140 g·m⁻². The amount is more preferably from 30 g·m⁻² to 90 g·m⁻².

In a case in which the amount of attachment of the plating layer is 15 g·m⁻² or more, a non-plated portion is inhibited from occurring due to a too small amount of attachment. In a case in which the amount of attachment of the plating layer is 140 g·m⁻² or less, a phenomenon is suppressed in which corrosion resistance is high and a plating layer is colored to black.

### (Cut End Surface of Cut-and-Processed Product)

### -Coverage of Plate Layer-

One portion of the cut end surface of the cut-and-processed product according to the disclosure is covered with a Zn-Al-Mg-based plating layer. One portion of the cut end surface is covered with a Zn-Al-Mg-based plating layer containing Al and Mg and thus having high corrosion resistance as compared with a Zn plating layer or an Al plating layer, and thus high corrosion resistance is also imparted to the cut end surface.

The coverage of the cut end surface with the plating layer is from 50 to 99%.

In a case in which the coverage with the plating layer is less than 50%, the coverage of the cut end surface with the plating layer is so low that corrosion resistance is reduced. In this regard, in a case in which the plated steel material is cut, a plating layer on a surface of the plated steel material runs around a plating layer on the cut end surface on one portion of the cut end surface. However, it is difficult to allow such a plating layer to run around the entire surface of the cut end surface.

Accordingly, the coverage with the plating layer is in the above range. The coverage with the plating layer is preferably from 70 to 99%, more preferably from 90 to 99%.

The coverage with the plating layer is measured as follows.

A repair coat (namely, a binder resin) is completely removed from a cut end surface of a cut-and-processed component as a measuring object, by immersion in a solvent that dissolves the repair coat and washing with an ultrasonic washing machine for 1 minute or more.

Next, gold is vapor-deposited at a thickness of about 10 nm on the cut end surface, whereby a specimen is produced.

An element distribution of Zn, Al and Mg among components of the plating layer in the cut end surface of the specimen is measured with an electron probe micro analyzer (EPMA) in a perpendicular direction to the sheet thickness. The proportion of a region in which any of Zn, Al and Mg is detected, with respect to the cut cross section, is determined as the coverage with the plating layer.

Here, distinguishment between any component of the plating layer and any component of the base steel material in measurement of a component element distribution of the plating layer with EPMA is determined by whether or not any plate component among Zn, Al and Mg is present at 1% by atm or more in quantitation with EPMA. A region in which 1% by atm or more of any plate component of Zn, Al and Mg can be confirmed to be present in quantitation with EPMA is defined as a region covered with the plating layer.

This operation is carried out three times, and the average value is calculated.

Measurement conditions of EPMA are a measurement region that is the width of the cut cross section (namely, sheet thickness) × 10 mm, an accelerating voltage of 25 kV, and a diameter of electron beam of 10 µmφ.

### -Repair Coat-

A non-plated surface of the base steel material and the Zn-Al-Mg-based plating layer around the non-plated surface, in the cut end surface of the cut-and-processed product according to the disclosure, are covered with the repair coat.

Specifically, for example, the repair coat may cover not only the non-plated surface of the base steel material, but also the plating layer located within at least 100 µm or more from an edge (namely, a boundary between the non-plated surface of the base steel material and the plating layer) of the plating layer. The repair coat is preferably formed so as to cover a sag surface and the entire cut end surface.

The formation state of the repair coat is confirmed as follows.

A cut-and-processed component as a measuring object is cut along a direction perpendicular to the cut end surface and in parallel with the sheet thickness direction.

Next, an embedding treatment with an embedding resin in which a steel sheet as a measuring object is mixed at a predetermined proportion with an embedding/curing agent is made, and a sample subjected to the embedding treatment is mechanically polished, thereby exposing a cut surface obtained by cutting the cut-and-processed component, and producing a specimen with the cut surface as an observation surface.

The observation surface of the specimen is observed at a magnification of from 50 to 100x with an EDS (Energy Dispersive X-ray Spectrometer)-attached SEM (Scanning Electron Microscope). An element distribution of Zn, Al and Mg among components of the plating layer is also measured. An edge of the plating layer is established by a region in which any of Zn, Al and Mg is detected. The distance between an edge of the plating layer and an edge of the repair coat is determined from an observed image with SEM. The distance between an edge of the plating layer and an edge of the repair coat is here a distance along a surface of the plating layer.

This operation can allow the formation state of the repair coat to be confirmed.

Measurement conditions of EDS are a measurement region that is the width of the cut cross section (namely, sheet thickness) × 200 µm in the cutting direction, an accelerating voltage of 15 V, and a diameter of electron beam of 10 µm.

### --Composition of Repair Coat--

The repair coat includes a component having the sacrificial corrosion-proof effect.

Specifically, the repair coat preferably includes a Zn-based metal powder and a binder resin. The repair coat may, if necessary, include any other additive.

The Zn-based metal powder is a metal powder containing Zn.

The Zn-based metal powder may be a metal powder containing Zn singly, or may be a metal powder containing Zn and a metal other than Zn.

The metal powder containing Zn and a metal other than Zn may be a mixed metal powder of a metal powder containing Zn singly and a metal powder containing a metal other than Zn singly, or may be an alloy metal powder containing Zn and a metal other than Zn.

Examples of the metal other than Zn include Al, Si, Mg, Co, Ti, V, Cr, Mn, Fe, Co, Ni, and stainless steel.

Among them, the metal other than Zn is preferably Al. In other words, the Zn-based metal powder preferably includes Zn and Al. In a case in which the metal powder contains Al, Zn₆ Al₂(OH)₁₆CO₃·4H₂O that is considered to have excellent corrosion-proof properties to the base steel material, due to Zn and Al, is easily produced, and therefore corrosion resistance is enhanced.

The content of Al with respect to Zn in the Zn-based metal powder containing Zn and Al is preferably from 20 to 45% by mass, more preferably from 25 to 35% by mass, particularly preferably from 28 to 34% by mass.

In a case in which the content of Al is 20% by mass or more, excess reductions in initial coat resistivity R1 and coat resistivity R2 after immersion in salt water are suppressed and corrosion resistance is enhanced.

In a case in which the content of Al is 45% by mass or less, an excess increase in coat resistivity R2 after immersion in salt water is suppressed and cathode peeling of the repair coat hardly occurs.

The total content of Zn and Al in the Zn-based metal powder containing Zn and Al, with respect to the Zn-based metal powder, is preferably 90% by mass or more, more preferably 95% by mass or more, particularly preferably 100% by mass.

In other words, the total content of any other metal than Zn and Al (in particular, content of V), with respect to the Zn-based metal powder, is preferably 10% by mass or less, more preferably 5% by mass or less, particularly preferably 0% by mass.

The average particle size of the Zn-based metal powder is preferably from 1 to 20 µm, more preferably from 1 to 10 µm. The average particle size of the Zn-based metal powder is in the above range, whereby the surface area of the Zn metal powder is increased and sacrificial corrosion-proof performance is easily operated and thus corrosion resistance is enhanced.

The "average particle size" is a particle size at which the accumulation from the smaller size reaches 50% in a particle size distribution on the number basis, as determined by a dynamic light scattering method.

The particle size of the Zn-based metal powder is determined by dissolving the repair coat (namely, binder resin) in a solvent, recovering the Zn-based metal powder by a centrifugation method, and measuring the particle size.

The content of the Zn-based metal powder, with respect to the entire repair coat, is preferably from 60 to 80% by mass, more preferably from 65 to 75% by mass.

In a case in which the content of the Zn-based metal powder is 60% by mass or more, excess increases in initial coat resistivity and coat resistivity after immersion in salt water are suppressed, and cathode peeling of the repair coat hardly occurs.

In a case in which the content of the Zn-based metal powder is 80% by mass or less, excess reductions in initial coat resistivity and coat resistivity after immersion in salt water are suppressed, and corrosion resistance is enhanced.

Accordingly, the content of the Zn-based metal powder is preferably in the above range.

Examples of the binder resin include well-known resins such as a polystyrene resin, a polyester resin, an epoxy resin, a urethane resin, a polyolefin resin, an acrylic resin, and a phenol resin.

Among them, the binder resin is preferably at least one selected from the group consisting of a polystyrene resin and an epoxy resin. In a case in which such a resin is applied, the coat resistivity after immersion in salt water is easily controlled in a preferred range and corrosion resistance is easily enhanced.

The binder resin may be a crosslinked resin or may be a non-crosslinked resin, and is preferably a crosslinked resin from the viewpoint of an enhancement in corrosion resistance.

The crosslinking resin to be used for forming a crosslinked resin can be any well-known crosslinking agent such as melamine, isocyanate, a silane compound, a zirconium compound, or a titanium compound depending on the type of a resin to be crosslinked.

The content of the binder resin, with respect to the repair coat, is preferably from 20 to 40% by mass, more preferably from 25 to 35% by mass.

In a case in which the content of the binder resin is 20% by mass or more, excess reductions in initial coat resistivity and coat resistivity after immersion in salt water are suppressed, and corrosion resistance is enhanced.

In a case in which the content of the binder resin is 40% by mass or less, excess increases in initial coat resistivity and coat resistivity after immersion in salt water are suppressed, and cathode peeling of the repair coat hardly occurs.

Accordingly, the content of the binder resin is preferably in the above range.

Examples of any other additive in the repair coat include a pigment (MgO, Al₂O₃, sedimentable barium sulfate, barium carbonate, calcium carbonate, carbon, magnesium carbonate, or the like), a dispersant, a defoamer, a preservative agent, a thickener, or a film formation aid.

### --Thickness of Repair Coat--

A too low thickness of the repair coat leads to a reduction in corrosion resistance. The upper limit value of the thickness of the repair coat is not particularly limited, and a too high thickness leads to not only a higher cost with respect to the cut end surface, but also a longer drying time after repair paint application.

Therefore, the thickness of the repair coat is 10 µm or more. The thickness of the repair coat is preferably from 10 to 100 µm, more preferably from 20 to 30 µm.

The thickness of the repair coat is measured as follows.

A cut-and-processed component as a measuring object is cut along a direction perpendicular to the cut end surface and in parallel with the sheet thickness direction.

Next, the cut-and-processed component as a measuring object is subjected to an embedding treatment with an embedding resin mixed at a predetermined proportion with an embedding/curing agent, and the sample subjected to the embedding treatment is mechanically polished, thereby exposing a cut surface obtained by cutting the cut-and-processed component, and producing a specimen in which a surface perpendicular to the cut end surface serves as an observation surface.

The observation surface of the specimen is observed at a magnification of from 50 to 100x with SEM (Scanning Electron Microscope), and the thickness of the repair coat at any point, formed on the non-plated surface of the base steel material, is measured.

This thickness measurement is carried out with three embedded samples, and the average value of three measurement values is calculated.

### --Coat Resistivity of Repair Coat--

In a case in which the initial coat resistivity R1 in the repair coat is less than 10 Ω/cm², the metal powder in the repair coat is gradually oxidized, and the sacrificial corrosion-proof performance of the repair coat is early deactivated, whereby corrosion resistance is reduced.

In a case in which the initial coat resistivity R1 in the repair coat is more than 1000 Ω/cm², the sacrificial corrosion-proof performance of the repair coat does not act at all, red rust or the like may occur on the steel basis material under the repair coat due to the influence of water or the like in the air, and corrosion resistance is reduced.

Accordingly, the initial coat resistivity R1 is from 10 to 1000 Ω/cm².

The initial coat resistivity R1 in the repair coat indicates a coat resistivity in a state in which the proportion of no corrosion in the total amount of the metal powder in the repair coat is 80% or more. In the case of a state in which the proportion of no corrosion in the total amount of the metal powder in the repair coat is 80% or more, the coat resistivity R1 in this state is from 10 to 1000 Ω/cm². The initial coat resistivity R1 is preferably from 300 to 500 Ω/cm² from the above viewpoint.

The initial coat resistivity R1 indicates the coat resistivity in any state of a state in which the cut-and-processed product is stored under the environment of no corrosion or a state in which the cut-and-processed product is stored under the environment of corrosion, as long as the proportion of no corrosion in the total amount of the metal powder in the coat is 80% or more.

Specifically, the coat resistivity in the repair coat of the cut-and-processed product during a period until the cut-and-processed product is subjected to any application (for example, until the cut-and-processed product is placed as a beam of a guardrail) after production of the cut-and-processed product, and under the environment of no corrosion corresponds to the "initial coat resistivity R1".

As long as the proportion of no corrosion in the total amount of the metal powder in the repair coat is 80% or more, the coat resistivity in the repair coat of the cut-and-processed product used as a beam of a guardrail under the environment of corrosion also corresponds to the "initial coat resistivity R1".

The proportion of corrosion in the total amount of the metal powder is defined to be the total ratio of the ratio of oxidization and the ratio of hydroxidization in the metal powder. The method of measuring the proportion of corrosion of the metal powder is performed by analysis of a cross section image of the repair coat. Specifically, the method is as follows.

The central area excluding a range of 10 mm from the end of the repair coat, in the cut end surface of the cut-and-processed component as a measuring object, is cut along a direction perpendicular to the cut end surface and in parallel with the sheet thickness direction.

Next, the cut-and-processed component as a measuring object is subjected to an embedding treatment with an embedding resin mixed at a predetermined proportion with an embedding/curing agent and the sample subjected to the embedding treatment is mechanically polished, thereby exposing the cut surface cutting the cut-and-processed component and the repair coat, and producing a specimen with a surface perpendicular to the cut end surface as an observation surface.

The observation surface of the specimen is subjected to mapping analysis by SEM (Scanning Electron Microscope) loaded with EDS (Energy Dispersive x-ray Spectroscopy). The observation magnification is here a magnification providing a field of view in which the entire repair coat can be observed from the interface between the repair coat and the base steel material, to the coat surface, in the thickness direction and 100 µm or more of the interface between the repair coat and the base steel material can be observed.

This observation of the field of view is carried out at three positions with respect to one embedded sample, namely, at nine positions in a total of three embedded samples, and the proportion of corrosion of the metal powder, with respect to each field of view, is calculated.

The proportion (%) of corrosion in the metal powder is calculated by "(Number of corroded metal powders/Number of all metal powders) × 100" in each field of view.

A corroded metal powder can be distinguished through the matching between detection positions of a metal element such as Zn and oxygen, by mapping analysis with SEM loaded with EDS.

This corroded metal powder here does not include any additive substance originally added in an oxidized state in paint, such as MgO or Al₂O₃. The proportion determined by excluding such an additive substance from the entire corroded metal powder is calculated as follows.

First, the proportion of corrosion of the metal powder is calculated by observation of the field of view, and then the proportion of an additive substance (MgO, Al₂O₃, or the like) added in paint serving as a raw material is subtracted. Specifically, the proportion (%) of an additive substance originally added, such as MgO or Al₂O₃, among all metal particles included in a paint material, is subtracted from the proportion (%) of corrosion of the metal powder, obtained by observation of the field of view.

In other words, the proportion (%) of corrosion of the metal powder is calculated by "(Number of corroded metal powders - Number of additive substances)/Number of all metal powders × 100" in the field of view.

Thus, the average value is calculated from the proportions each obtained by subtracting the measurement value of the proportion of the additive substance from the measurement value of the proportion of corrosion in each of the above nine fields of view.

The value obtained by subtracting the resulting average value (%) of the proportions from 100% (= 100 - Resulting average value of proportions) is defined as "Proportion of no corrosion in total amount of metal powder in repair coat".

The additive substance included in an oxidized state in paint, such as MgO or Al₂O₃, can be distinguished as a corroded metal powder by calculating the increase of an oxide in the repair coat from an additive substance-derived oxide in paint.

In this regard, in a case in which the coat resistivity R2 after immersion in salt water, in the repair coat, is less than 5 Ω/cm², the metal powder in the repair coat is rapidly consumed under the environment of corrosion, and the sacrificial corrosion-proof performance of the repair coat is early deactivated, whereby corrosion resistance is reduced.

In a case in which the coat resistivity R2 after immersion in salt water, in the repair coat, is more than 50 Ω/cm², reduction reaction of oxygen collectively occurs in an exposed portion of the steel basis material immediately below the repair coat under the environment of corrosion and the change to an basic environment is caused to hardly allow intermolecular force of a hydrogen bond or the like to act, whereby cathode peeling of the repair coat occurs to result in a reduction in corrosion resistance.

The coat resistivity R2 after immersion in salt water, in the repair coat, is preferably from 10 to 45 Ω/cm², still more preferably from 25 to 40 Ω/cm².

The coat resistivity after immersion in salt water, in the repair coat, is a coat resistivity after immersion of the cut-and-processed product in 5% by mass salt water for 3 hours. More specifically, the coat resistivity is a coat resistivity after immersion of at least the cut end surface of the cut-and-processed product in 5% by mass salt water at a liquid temperature of 25°C for 3 hours.

The initial coat resistivity R1 and the coat resistivity R2 after immersion in salt water, in the repair coat, are adjusted by, for example, the thickness of the repair coat, and the type and the amount of the metal powder.

The coat resistivity is measured as follows.

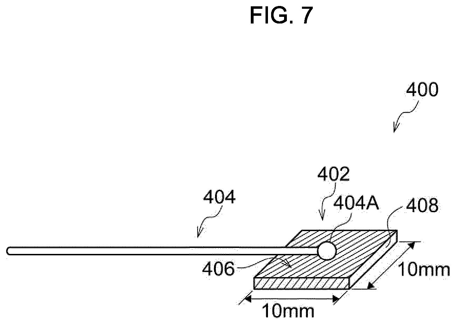

A cut-and-processed product as a measuring object is cut out to a 10-mm square, and a cut piece having a cut end surface on which the repair coat is formed is obtained. The cut end surface of the cut piece obtained is set as a measurement surface, and a conductor is bound to a site other than the measurement surface by a method that does not prevent conduction, such as spot welding or a soldering treatment conductor. A cut end surface as a measuring object is exposed only at a certain area, other site is insulated and sealed, and thus a specimen of the repair coat is obtained (see FIG. 7).

The specimen obtained is subjected to alternating-current impedance measurement of the repair coat on the cut end surface exposed, and thus the coat resistivity is measured.

This operation is carried out twice, and the average value of the coat resistivity is calculated.

In FIG. 7, 400 represents the specimen, 402 represents the cut piece of the cut-and-processed product, 404 represents the conductor, 404A represents a binding portion of the conductor, 406 represents an insulation seal, and 408 represents the repair coat on the cut end surface exposed.

### (Specific Mode of Cut End Surface of Cut-and-Processed Product)

Cut-and-processed products according to the first to third embodiments of the disclosure are described as specific modes of the cut end surface of the cut-and-processed product of the disclosure, with reference to the drawings.

In the following description, the "first surface and second surface of the cut-and-processed product" are surfaces opposite to each other in the sheet thickness direction.

The "sag surface" refers to a surface that is generated by tensile stress acting on a surface of the plated steel material and plastically deformed in a curved manner in cutting and processing of the plated steel material.

The "shear surface" refers to a surface that is cut by shear force in cutting and processing of the plated steel material.

The "fracture surface" is formed by fracturing the plated steel material with, as a point of origin, a crack generated in the plated steel material in cutting and processing.

The "sag surface", "shear surface", and "fracture surface" are continued surfaces and form the cut end surface of the cut-and-processed product.

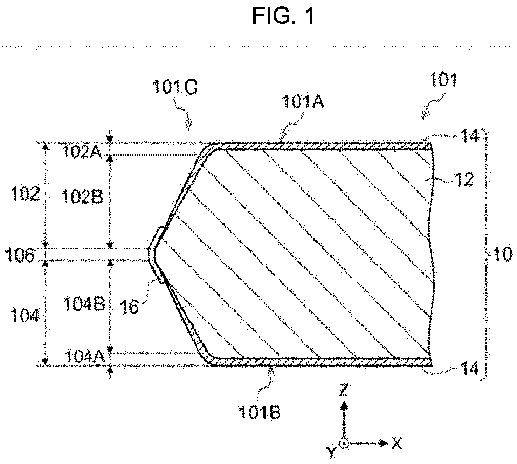

In FIG. 1 to FIG. 6, the sheet length direction is an X direction, the sheet width direction is a Y direction, and the sheet thickness direction is a Z direction, in the plated steel material.

In FIG. 1 to FIG. 6, one representing the same member or site is marked with the same symbol.

### -First Embodiment-

A cut end surface 101C of a cut-and-processed product 101 according to a first embodiment of the disclosure has a first inclined surface 102, a second inclined surface 104, and a fracture surface 106, as illustrated in FIG. 1.

The first inclined surface 102 includes a first sag surface 102A continued from a first surface 101A of the cut-and-processed product 101 and a first shear surface 102B continued from the first sag surface 102A.

The first inclined surface 102 is inclined toward the center from the first surface 101A of the cut-and-processed product 101 in the sheet thickness direction. In other words, the first shear surface 102B is a surface having a predetermined inclined angle against the sheet thickness direction of the plated steel material 10.

The second inclined surface 104 includes a second sag surface 104A continued from a second surface 101B of the cut-and-processed product 101 and a second shear surface 104B continued from the second sag surface 104A.

The second inclined surface 104 is inclined toward the center from the second surface 101B of the cut-and-processed product 101 in the sheet thickness direction. In other words, the surface is a surface having a predetermined inclined angle against the sheet thickness direction of the plated steel material 10.

The fracture surface 106 is formed between the first inclined surface 102 and the second inclined surface 104.

The fracture surface 106 is formed by fracture of the plated steel material 10 in cutting and processing of the plated steel material. Therefore, the fracture surface 106 is hardly covered with a plating layer 14, and serves as a non-plated surface of a base steel material 12.

At least one portion of the base steel material 12 located on the first inclined surface 102 and the second inclined surface 104 in the cut end surface 101C of the cut-and-processed product 101 is covered with the plating layer 14.

Specifically, the first inclined surface 102 is covered with the plating layer 14 covering the base steel material 12 located on the first surface 101A in cutting and processing of the plated steel material 10. The second inclined surface 104 is covered with a plating layer 14 covering a base steel material located on the second surface 101B in cutting and processing of the plated steel material 10.

In other words, the first inclined surface 102 and the second inclined surface 104 are each covered with a plating layer 14 continued from the plating layer 14 of the cut-and-processed product 101.

The area of the plating layer 14 covering the base steel material 12 located on the first inclined surface 102 and the second inclined surface 104 is adjusted, whereby the coverage of the cut end surface with the plating layer 14 in the cut-and-processed product 101 is adjusted.

The entire surface of the base steel material 12 located on the first inclined surface 102 and the second inclined surface 104 may be covered with the plating layer 14.

In this regard, a non-plated surface of the base steel material 12, including the fracture surface 106, and the plating layer 14 around the non-plated surface, in the cut end surface 101C of the cut-and-processed product 101, are covered with a repair coat 16.

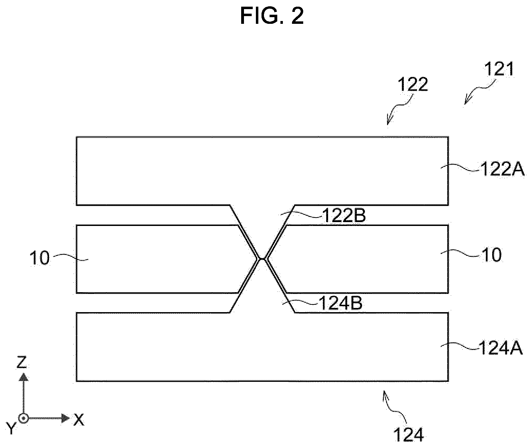

The cut-and-processed product 101 can be produced by, for example, a cutting and processing tool 121 illustrated in FIG. 2. The cutting and processing tool 121 has a punch 122 having a wedge-shaped first blade portion 122B in a first base portion 122A, and a die 124 having a wedge-shaped second blade portion 124B in a second base portion 124A, when viewed in the sheet width direction (Y direction), as illustrated in FIG. 2. The wedge-shaped first blade portion 122B and second blade portion 124B extend in the sheet width direction (Y direction), and the plated steel material 10 is cut along a direction in which the first blade portion 122B and the second blade portion 124B extend.

The plated steel material 10 to be cut by the first blade portion 122B of the die 124 and the second blade portion 124B of the punch 122 is placed between the die 124 and the punch 122 in a state in which both ends of the plated steel material are retained by a blank holder not illustrated. The die 124 and the punch 122 are here disposed so that the first blade portion 122B and the second blade portion 124B face to each other. The plated steel material 10 is then cut by relatively pushing the punch 122 to the die 124.

The cutting and processing tool 121 is operated such that, when the punch 122 is pushed to the die 124, tensile stress generated between the first blade portion 122B and the second blade portion 124B, and the plated steel material 10, allows the plating layer 14 on a surface of the plated steel material 10 to enter the cut end surface 101C, thereby covering one portion of the cut end surface 101C to be covered with the plating layer 14. In other words, the plating layer 14 on a surface of the plated steel material 10 is allowed to follow the movements of the first blade portion 122B and the second blade portion 124B to the plated steel material 10 in pushing of the punch 122 to the die 124, thereby allowing the plating layer 14 to enter the cut end surface 101C. Thus, the plated steel material 10 can be cut and processed and at least one portion of the first inclined surface 102 and the second inclined surface 104 in the cut end surface 101C of the cut-and-processed product 101 can be covered with the plating layer 14.

The shape of the cut end surface 101C of the cut-and-processed product 101 cut by the cutting and processing tool 112 is due to the shapes of the first blade portion 122B and the second blade portion 124B. The first blade portion 122B and the second blade portion 124B have a wedge shape, whereby the cut end surface 101C of the cut-and-processed product 101 does not have a shape along the sheet thickness direction, but a shape having the first inclined surface 102 and the second inclined surface 104 along an inclined surface of a wedge shape.

The shapes of the first blade portion 122B and the second blade portion 124B in the cutting and processing tool 121 are wedge shapes, whereby the plating layer 14 on a surface of the plated steel material 10 easily follows the movements of the first blade portion 122B and the second blade portion 124B, along inclined surfaces of such wedge shapes in cutting of the plated steel material 10. As a result, the plating layer 14 on a surface of the plated steel material 10 can be allowed to follow not only the first sag surface 102A and the second sag surface 104A, but also the first shear surface 102B and the second shear surface 104B, of the cut end surface 101C.

The inclined angles of the first shear surface 102B and the second shear surface 104B are adjusted, whereby the coverage of the cut end surface 101C of the cut-and-processed product 101 with the plating layer 14 can be adjusted. Specifically, the coverage with plate is increased by increasing the angles of inclined surfaces of the wedge shapes of the first blade portion 122B and the second blade portion 124B relative to the sheet thickness direction of the plated steel material 10.

### -Second Embodiment-

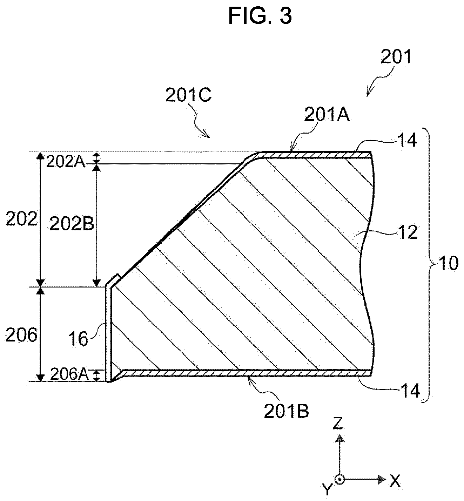

A cut end surface 201C of a cut-and-processed product 201 according to a second embodiment of the disclosure has a side surface 202 and a fracture surface 206, as illustrated in FIG. 3.

The side surface 202 includes a sag surface 202A continued from a first surface 201A of the cut-and-processed product 201 and a shear surface 202B continued from the sag surface 202A.

The side surface 202 is inclined toward the center from the first surface 201A of the cut-and-processed product 201 in the sheet thickness direction. In other words, the side surface 202 is a surface having a predetermined inclined angle against the sheet thickness direction of the plated steel material 10.

The fracture surface 206 is a surface that continues from the side surface 202 and reaches the second surface 201B of the cut-and-processed product 201.

The fracture surface 206 may have a folded portion 206A (namely, burr) protruded as compared with a second surface 201B, at the second surface 201B side of the cut-and-processed product 201.

At least one portion of the base steel material 12 located on the side surface 202, in the cut end surface 201C of the cut-and-processed product 201, is covered with the plating layer 14.

Specifically, the side surface 202 is covered with the plating layer 14 covering the base steel material 12 located on the first surface 201A in cutting and processing of the plated steel material 10.

In other words, the side surface 202 is covered with a plating layer 14 continued from the plating layer 14 of the cut-and-processed product 201.

The area of the plating layer 14 covering the base steel material 12 located on the side surface 202 is adjusted, whereby the coverage of the cut end surface with the plating layer 14 in the cut-and-processed product 201 is adjusted.

The entire surface of the base steel material 12 located on the side surface may be covered with the plating layer 14.

In this regard, a non-plated surface of the base steel material 12, including the fracture surface 206, and the plating layer 14 around the non-plated surface, in the cut end surface 201C of the cut-and-processed product 201, are covered with a repair coat 16.

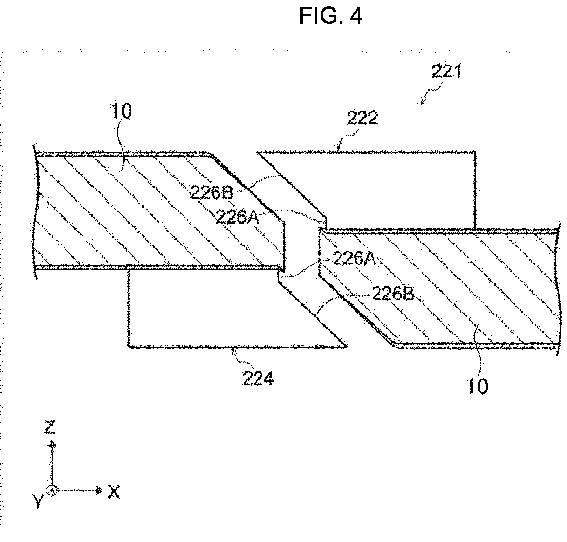

The cut-and-processed product 201 can be produced by, for example, a cutting and processing tool 221 illustrated in FIG. 4.

The cutting and processing tool 221 has an upper slit blade 222 and a lower slit blade 224.

The upper slit blade 222 and the lower slit blade 224 each have a first surface 226A along the sheet thickness direction of the plated steel material 10 and a tapered surface 226B inclined outward relative to the first surface 226A on a surface that faces the cut end surface 201C in cutting and processing of the plated steel material 10, when viewed in the sheet width direction (Y direction), as illustrated in FIG. 4.

The upper slit blade 222 and the lower slit blade 224 extend in the sheet width direction (Y direction), and the plated steel material 10 is cut in a direction in which the upper slit blade 222 and the lower slit blade 224 extend.

The plated steel material 10 to be cut by the upper slit blade 222 and the lower slit blade 224 is placed between the upper slit blade 222 and the lower slit blade 224 in a state in which both ends of the plated steel material are retained by a blank holder not illustrated. The plated steel material 10 is then cut by relatively pushing the upper slit blade 222 and the lower slit blade 224.

The cutting and processing tool 221 is operated such that, when the upper slit blade 222 is pushed to the lower slit blade 224, tensile stress generated between the upper slit blade 222 and the lower slit blade 224, and the plated steel material 10, allows the plating layer 14 on a surface of the plated steel material 10 to enter the cut end surface 201C, thereby covering one portion of the cut end surface 201C to be covered with the plating layer 14. In other words, the plating layer 14 on a surface of the plated steel material 10 is allowed to follow the movements of the upper slit blade 222 and the lower slit blade 224 to the plated steel material 10 in pushing of the upper slit blade 222 to the lower slit blade 224, thereby allowing the plating layer 14 to enter the cut end surface 201C. Thus, the plated steel material can be cut and processed and at least one portion of the side surface 202 in the cut end surface 201C of the cut-and-processed product 201 can be covered with the plating layer 14.

The shape of the cut end surface 201C of the cut-and-processed product 201 cut by the cutting and processing tool 121 is due to the shapes of the upper slit blade 222 and the lower slit blade 224. The upper slit blade 222 and the lower slit blade 224 have a first surface 226A along the sheet thickness direction of the plated steel material 10 and the tapered surface 226B inclined outward relative to the first surface 226A, whereby the cut end surface 201C of the cut-and-processed product 201 has not a shape along the sheet thickness direction, but a shape having the side surface 202 along an inclined surface of the tapered surface 226B.

The upper slit blade 222 and the lower slit blade 224 have the tapered surface 226B in the cutting and processing tool 221, whereby the plating layer 14 on a surface of the plated steel material 10 easily follows the movements of the upper slit blade 222 and the lower slit blade 224, along an inclined surface of the tapered surface 226B in cutting of the plated steel material 10. As a result, the plating layer 14 on a surface of the plated steel material 10 can be allowed to follow not only the sag surface 202A, but also the shear surface 202B, in the cut end surface 201C.

The width of the first surface 226A along the sheet thickness direction of the plated steel material 10, of each of the upper slit blade 222 and the lower slit blade 224, is adjusted, whereby the coverage of the cut end surface 201C of the cut-and-processed product 201 with the plating layer 14 can be adjusted.

### -Third Embodiment-

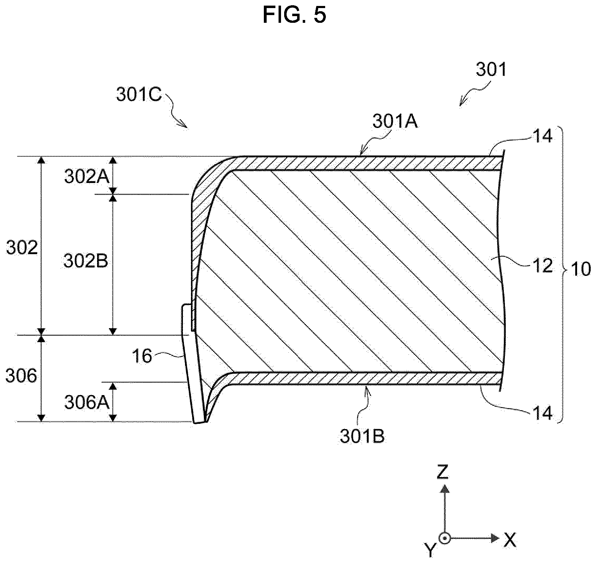

A cut end surface 301C of a cut-and-processed product 301 according to a third embodiment of the disclosure has a side surface 302 and a fracture surface 306, as illustrated in FIG. 5.

The side surface 302 includes a sag surface 302A continued from a first surface 301A of the cut-and-processed product 301 and a shear surface 302B continued from the sag surface 302A.

The side surface 302 is along the sheet thickness direction.

The fracture surface 306 is a surface that continues from the side surface 302 and reaches the second surface 301B of the cut-and-processed product 301.

The fracture surface 306 may have a folded portion 306A (namely, burr) protruded as compared with a second surface 301B, at the second surface 301B side of the cut-and-processed product 301.

At least one portion of the base steel material 12 located on the side surface 302, in the cut end surface 301C of the cut-and-processed product 301, is covered with the plating layer 14.

Specifically, the side surface 302 is covered with the plating layer 14 covering the base steel material 12 located on the first surface 301A in cutting and processing of the plated steel material 10.

In other words, the side surface 302 is covered with a plating layer 14 continued from the plating layer 14 of the cut-and-processed product 301.

The area of the plating layer 14 covering the base steel material 12 located on the side surface 302 is adjusted, whereby the coverage of the cut end surface with the plating layer 14 in the cut-and-processed product 301 is adjusted.

The entire surface of the base steel material 12 located on the side surface may be covered with the plating layer 14.

In this regard, a non-plated surface of the base steel material 12, including the fracture surface 306, and the plating layer 14 around the non-plated surface, in the cut end surface 301C of the cut-and-processed product 301, are covered with a repair coat 16.

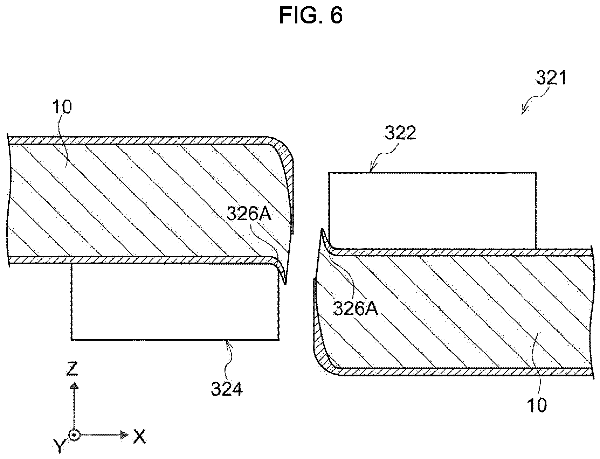

The cut-and-processed product 301 can be produced by, for example, a cutting and processing tool 321 illustrated in FIG. 6.

The cutting and processing tool 321 has an upper slit blade 322 and a lower slit blade 324.

The upper slit blade 322 and the lower slit blade 324 each have a curved portion 326A on a corner that faces the plated steel material 10 when viewed in the plated width direction (Y direction) and that faces the cut end surface 301C in cutting and processing of the plated steel material 10, as illustrated in FIG. 6.

The upper slit blade 322 and the lower slit blade 324 extend in the sheet width direction (Y direction), and the plated steel material 10 is cut in a direction in which the upper slit blade 322 and the lower slit blade 324 extend.

The plated steel material 10 to be cut by the upper slit blade 322 and the lower slit blade 324 is placed between the upper slit blade 322 and the lower slit blade 324 in a state in which both ends of the plated steel material are retained by a blank holder not illustrated. The plated steel material 10 is then cut by relatively pushing the upper slit blade 322 and the lower slit blade 324.

The cutting and processing tool 321 is operated such that, when the upper slit blade 322 is pushed to the lower slit blade 324, tensile stress generated between the upper slit blade 322 and the lower slit blade 324, and the plated steel material 10, allows the plating layer 14 on a surface of the plated steel material 10 to enter the cut end surface 301C, thereby covering one portion of the cut end surface 301C to be covered with the plating layer 14. In other words, the plating layer 14 on a surface of the plated steel material 10 is allowed to follow the movements of the upper slit blade 322 and the lower slit blade 324 to the plated steel material 10 in pushing of the upper slit blade 322 to the lower slit blade 324, thereby allowing the plating layer 14 to enter the cut end surface 301C. Thus, the plated steel material can be cut and processed and at least one portion of the side surface 302 in the cut end surface 301C of the cut-and-processed product 301 can be covered with the plating layer 14.

The upper slit blade 322 and the lower slit blade 324 in the cutting and processing tool 321 each have the curved portion 326A, whereby tensile stress applied to the plating layer 14 on a surface of the plated steel material 10 in cutting of the plated steel material 10 is relaxed. As a result, the plating layer 14 on a surface of the plated steel material 10 can be allowed to follow not only the sag surface 302A, but also the shear surface 302B, in the cut end surface 301C.

The radius of curvature of the curved portion 326A of each of the upper slit blade 322 and the lower slit blade 324 is adjusted, whereby the coverage of the cut end surface 301C of the cut-and-processed product 301 with the plating layer 14 can be adjusted.

### (Application of Cut-and-Processed Product)

The cut-and-processed product of the disclosure is applied to an application such as a steel sheet to be used for a guardrail (specifically, a guardrail component, in particular, a beam of a guardrail), or shaped steel, a supporting column, a joint, a sound-insulating wall, a soundshielding wall, a member for electrical equipment, a member for safe environment, a structural member, a solar mount, or the like for a plastic greenhouse or an agricultural greenhouse.

The cut-and-processed product of the disclosure is utilized in which the plated steel material is cut and processed and then subjected to, for example, processing such as press molding depending on the above application.

### Examples

Hereinafter, the disclosure is further specifically described with reference to Examples. However, these Examples do not limit the disclosure.

### (Preparation of Plated Steel Plate)

The following steel types of plated steel material were prepared.
Zn-6%Al-3%Mg: Zn-Al-Mg-based-plated steel sheet (sheet thickness = 4.5 mm, plating composition = Al: 6% by mass, Mg: 3% by mass, balance: Zn, amount of attachment of plated on one surface = 120 g/m²)
Zn-11%Al-3%Mg: Zn-Al-Mg-based-plated steel sheet (sheet thickness = 4.5 mm, plating composition = Al: 11% by mass, Mg: 3% by mass, balance: Zn, amount of attachment of plate on one surface = 120 g/m²)
Zn-19%Al-6%Mg: Zn-Al-Mg-based-plated steel sheet (sheet thickness = 4.5 mm, plating composition = Al: 19% by mass, Mg: 6% by mass, balance: Zn, amount of attachment of plate on one surface = 120 g/m²)
Zn: melt zinc-plated steel sheet (sheet thickness = 4.5 mm, amount of attachment of plate = 120 g/m²)

### (Paint for Repair)

Each paint for repair, having a composition shown in Table 1, was prepared.

### (Examples)

The plated steel sheet was cut and processed with a cutting and processing tool, according to conditions in Table 2, and a specimen having a cut end surface illustrated in FIG. 1, FIG. 3 or FIG. 5 was obtained. The shape of the cutting and processing tool was adjusted and the coverage of the cut end surface with a plating layer were as shown in Table 2.

Next, the paint for repair was applied to a non-plated surface of the base steel material of the plated steel sheet and a plating layer around the non-plated surface, in the cut end surface of the specimen, according to conditions shown in Table 2, and thus a repair coat was formed.

The thickness of the repair coat was as shown in Table 2. The initial coat resistivity, and the coat resistivity after immersion in salt water (namely, the coat resistivity after immersion of a cut-and-processed product in % by mass salt water for 3 hours) were as shown in Table 2.

These operations provided a specimen of a cut-and-processed product.

### (Evaluations)

The following evaluations were carried out with respect to the cut end surface of the resulting specimen of the cut-and-processed product.

### -Cathode Peeling Resistance-

A composite cycle corrosion test according to CCT-JASO M609 was carried out for 30 cycles.

Thereafter, a tape ("trade name CELLULOSE TAPE (registered trademark)" manufactured by NICHIBAN CO., LTD.) was applied to a surface with the repair coat formed thereon, on the cut end surface of the specimen of the cut-and-processed product, and then peeled.

The tape peeled was observed, and the proportion (hereinafter, "peeling area ratio") of the area of the repair coat from which the tape was peeled, with respect to the area of the repair coat to which the tape was applied, was determined, and evaluated according to the following criteria. "A" and "B" were regarded as pass.
A: a peeling area ratio of 0%
B: a peeling area ratio of from more than 0% to 5%
D: a peeling area ratio of more than 5%

### -Long-Term Corrosion Resistance 1-

A composite cycle corrosion test according to CCT-JASO M609 was carried out for 120 cycles.

The area of red rust occurrence on the cut end surface of the specimen of the cut-and-processed product was measured, and evaluated according to the following criteria. "A" and "B" were regarded as pass.
A: a red rust area ratio of 0%
B: a red rust area ratio of from more than 0% to 10%
C: a red rust area ratio of from more than 10% to 20%
D: a red rust area ratio of more than 20%
B or higher rating: pass

### -Long-Term Corrosion Resistance 2-

A composite cycle corrosion test according to CCT-JASO M609 was carried out for 180 cycles.

The area of red rust occurrence on the cut end surface of the specimen of the cut-and-processed product was measured, and evaluated according to the following criteria. "A" and "B" were regarded as pass.
A: a red rust area ratio of 0%
B: a red rust area ratio of from more than 0% to 20%
D: a red rust area ratio of more than 20%
B or higher rating: pass

**[Table 1]**

| Type of paint No. | Zn-based metal powder | | | | Other pigment | | Al powder/Zn powder Mass ratio | Binder resin | | Zn-based metal powder/coat Mass ratio |
|---|---|---|---|---|---|---|---|---|---|---|
| | Zn powder | | Al powder | | | | | Type | Blending ratio [% by mass] | |
| | Blending ratio [% by mass] | Particle size [µm] | Blending ratio [% by mass] | Particle size [µm] | Blending ratio [% by mass] | Particle size [µm] | | | | |
| 1 | 60 | from 1 to 10 | 12 | from 1 to 10 | 0 | | 20.0% | Polystyrene | 28 | 72.0% |
| 2 | 55 | from 1 to 10 | 17 | from 1 to 10 | 0 | | 30.9% | Polystyrene | 28 | 72.0% |
| 3 | 50 | from 1 to 10 | 22 | from 1 to 10 | 0 | | 44.0% | Polystyrene | 28 | 72.0% |
| 4 | 61 | from 1 to 10 | 19 | from 1 to 10 | 0 | | 31.1% | Polystyrene | 20 | 80.0% |
| 5 | 46 | from 1 to 10 | 14 | from 1 to 10 | 0 | | 30.4% | Polystyrene | 40 | 60.0% |
| 6 | 54.9 | from 1 to 10 | 16.9 | from 1 to 10 | (Si)0.2 | from 0.1 to 0.5 | 30.8% | Polystyrene | 28 | 71.9% |
| 7 | 54.9 | from 1 to 10 | 16.9 | from 1 to 10 | (MgO)0.2 | from 1 to 5 | 30.8% | Polystyrene | 28 | 71.9% |
| 8 | 72 | from 1 to 10 | 0 | from 1 to 10 | 0 | | - | Polystyrene | 28 | 72.0% |
| 9 | 62 | from 1 to 10 | 10 | from 1 to 10 | 0 | | 16.1% | Polystyrene | 28 | 72.0% |
| 10 | 55 | from 1 to 10 | 17 | from 1 to 10 | 0 | | 30.9% | Polyester | 28 | 72.0% |
| 11 | 55 | from 1 to 10 | 17 | from 1 to 10 | 0 | | 30.9% | epoxy | 28 | 72.0% |
| 12 | 0 | from 1 to 10 | 72 | from 1 to 10 | 0 | | - | Polystyrene | 28 | 72.0% |
| 13 | 65 | from 1 to 10 | 20 | from 1 to 10 | 0 | | 30.8% | Polystyrene | 15 | 85.0% |
| 14 | 42 | from 1 to 10 | 13 | from 1 to 10 | 0 | | 31.0% | Polystyrene | 45 | 55.0% |
| 15 | 48 | from 1 to 10 | 24 | from 1 to 10 | 0 | | 50.0% | Polystyrene | 28 | 72.0% |
| 16 | 55 | from 1 to 10 | 17 | from 1 to 10 | 0 | | 30.9% | Urethane | 28 | 72.0% |
| 17 | 55 | from 1 to 10 | 17 | from 1 to 10 | 0 | | 30.9% | Acrylic | 28 | 72.0% |

**[Table 2]**

| | | | | Repair coat | | | | | | | |
|---|---|---|---|---|---|---|---|---|---|---|---|
| No. | Type of steel of plated steel material | Shape of cut end surface | Coverage of cut end surface with plating layer [%] | Type of paint | Thickne ss {µm} | Initial coat resistivity [Ω/cm² | Coat resistivity after immersion in salt water [Ω/cm²] | Cathode peeling resistance | Long-term corrosio n resistan ce 1 | Long-term corrosio n resistan ce 2 | Note |
| 1 | Zn-19%Al-6%Mg | FIG. 1 | 90 | 1 | 30 | 330 | 30 | A | A | B | Disclosure Example |
| 2 | Zn-19%Al-6%Mg | FIG. 1 | 90 | 2 | 30 | 330 | 35 | A | A | A | Disclosure Example |
| 3 | Zn-19%Al-6%Mg | FIG. 1 | 90 | 3 | 30 | 330 | 40 | A | A | B | Disclosure Example |
| 4 | Zn-19%Al-6%Mg | FIG. 1 | 90 | 4 | 30 | 300 | 30 | A | A | B | Disclosure Example |
| 5 | Zn-19%Al-6%Mg | FIG. 1 | 90 | 5 | 30 | 500 | 50 | B | B | B | Disclosure Example |
| 6 | Zn-19%Al-6%Mg | FIG. 1 | 90 | 6 | 30 | 330 | 35 | A | A | B | Disclosure Example |
| 7 | Zn-19%Al-6%Mg | FIG. 1 | 90 | 7 | 30 | 330 | 35 | A | A | B | Disclosure Example |
| 8 | Zn-19%Al-6%Mg | FIG. 1 | 90 | 8 | 30 | 300 | 20 | A | B | B | Disclosure Example |
| 9 | Zn-19% Al-10% Mg | FIG. 1 | 90 | 9 | 30 | 300 | 25 | A | B | B | Disclosure Example |
| 10 | Zn-19%Al-6%Mg | FIG. 1 | 90 | 10 | 30 | 300 | 45 | B | A | B | Disclosure Example |
| 11 | Zn-19%Al-6%Mg | FIG. 1 | 90 | 11 | 30 | 300 | 25 | A | A | B | Disclosure Example |
| 12 | Zn-19%Al-6%Mg | FIG. 1 | 90 | 2 | 10 | 300 | 30 | A | B | B | Disclosure Example |
| 13 | Zn-19%Al-6%Mg | FIG. 1 | 90 | 2 | 100 | 500 | 50 | A | A | A | Disclosure Example |
| 14 | Zn-19%Al-6%Mg | FIG. 1 | 50 | 2 | 30 | 330 | 35 | A | B | B | Disclosure Example |
| 15 | Zn-19%Al-6%Mg | FIG. 1 | 99 | 2 | 30 | 330 | 35 | A | A | A | Disclosure Example |
| 16 | Zn-19%Al-6%Mg | FIG. 1 | 90 | 4 | 10 | 10 | 5 | A | B | B | Disclosure Example |
| 17 | Zn-19%Al-6%Mg | FIG. 1 | 90 | 5 | 100 | 1000 | 50 | B | A | B | Disclosure Example |
| 18 | Zn-19%Al-6%Mg | FIG. 3 | 80 | 1 | 30 | 330 | 30 | A | A | B | Disclosure Example |
| 19 | Zn-19%Al-6%Mg | FIG. 3 | 80 | 2 | 30 | 330 | 35 | A | A | A | Disclosure Example |
| 20 | Zn-19%Al-6%Mg | FIG. 3 | 80 | 3 | 30 | 330 | 40 | A | A | B | Disclosure Example |
| 21 | Zn-19%Al-6%Mg | FIG. 5 | 80 | 1 | 30 | 330 | 30 | A | A | B | Disclosure Example |
| 22 | Zn-19%Al-6%Mg | FIG. 5 | 80 | 2 | 30 | 330 | 35 | A | A | A | Disclosure Example |
| 23 | Zn-19%Al-6%Mg | FIG. 5 | 80 | 3 | 30 | 330 | 40 | A | A | B | Disclosure Example |
| 24 | Zn-11%Al-3%Mg | FIG. 1 | 90 | 1 | 30 | 330 | 30 | A | A | B | Disclosure Example |
| 25 | Zn-11%Al-3%Mg | FIG. 1 | 90 | 2 | 30 | 330 | 35 | A | A | A | Disclosure Example |
| 26 | Zn-11%Al-3%Mg | FIG. 1 | 90 | 3 | 30 | 330 | 40 | A | A | B | Disclosure Example |
| 27 | Zn-6%Al-3%Mg | FIG. 1 | 90 | 1 | 30 | 330 | 30 | A | A | B | Disclosure Example |
| 28 | Zn-6%Al-3%Mg | FIG. 1 | 90 | 2 | 30 | 330 | 35 | A | A | A | Disclosure Example |
| 29 | Zn-6%Al-3%Mg | FIG. 1 | 90 | 3 | 30 | 330 | 40 | A | A | B | Disclosure Example |
| 30 | Zn-19%Al-6%Mg | FIG. 1 | 90 | 2 | 8 | 250 | 20 | A | C | D | Comparati ve Example |
| 31 | Zn-19%Al-6%Mg | FIG. 1 | 90 | 12 | 30 | 5000 | 3000 | D | D | D | Comparati ve Example |
| 32 | Zn-19%Al-6%Mg | FIG. 1 | 90 | 13 | 30 | 5 | 5 | A | C | D | Comparati ve Example |
| 33 | Zn-19%Al-6%Mg | FIG. 1 | 90 | 14 | 30 | 1500 | 80 | D | C | D | Comparati ve Example |
| 34 | Zn-19%Al-6%Mg | FIG. 1 | 90 | 15 | 30 | 500 | 60 | B | C | D | Comparati ve Example |
| 35 | Zn-19%Al-6%Mg | FIG. 3 | 45 | 2 | 30 | 330 | 35 | A | C | D | Comparati ve Example |
| 36 | Zn-19%Al-6%Mg | FIG. 5 | 45 | 2 | 30 | 330 | 35 | A | C | D | Comparati ve Example |
| 37 | Zn | FIG. 1 | 90 | 1 | 30 | 330 | 30 | A | D | D | Comparati ve Example |
| 38 | Zn | FIG. 1 | 90 | 2 | 30 | 330 | 35 | A | D | D | Comparati ve Example |
| 40 | Zn-19%Al-6%Mg | FIG. 1 | 90 | 16 | 30 | 420 | 47 | B | A | B | Disclosure Example |
| 41 | Zn-19%Al-6%Mg | FIG. 1 | 90 | 17 | 30 | 560 | 50 | B | B | B | Disclosure Example |
| 42 | Zn-12% Al-5% Mg | FIG. 1 | 90 | 1 | 30 | 330 | 30 | A | A | B | Disclosure Example |
| 43 | Zn-12% Al-5% Mg | FIG. 1 | 90 | 2 | 30 | 330 | 35 | A | A | A | Disclosure Example |
| 44 | Zn-12% Al-5% Mg | FIG. 1 | 90 | 3 | 30 | 330 | 40 | A | A | B | Disclosure Example |
| 45 | Zn-3.5%Al-3%Mg | FIG. 1 | 90 | 1 | 30 | 330 | 30 | A | A | B | Disclosure Example |
| 46 | Zn-3.5%Al-3%Mg | FIG. 1 | 90 | 2 | 30 | 330 | 35 | A | A | A | Disclosure Example |
| 47 | Zn-3.5%Al-3%Mg | FIG. 1 | 90 | 3 | 30 | 330 | 40 | A | A | B | Disclosure Example |

As clear from the above results, Disclosure Examples each exhibited suppressed cathode peeling of a repair coat and had excellent corrosion resistance of a cut end surface from the early stage to the long term, as compared with Comparative Examples.

The descriptions of symbols are as follows.
10 Plate steel material
12 Base steel material
14 Zn-Al-Mg-Based plating layer
16 Repair coat
101 Cut-and-processed product
101A First surface of cut-and-processed product
101B Second surface of cut-and-processed product
101C Cut end surface of cut-and-processed product
102 First inclined surface
102A Sag surface
102B Shear surface
104 Second inclined surface
104A Second sag surface
104B Second shear surface
106 Fracture surface
201 Cut-and-processed product
201A First surface of cut-and-processed product
201B Second surface of cut-and-processed product
201C Cut end surface of cut-and-processed product
202 Side surface
202A Sag surface
202B Shear surface
206 Fracture surface
301 Cut-and-processed product
301A First surface of cut-and-processed product
301B Second surface of cut-and-processed product
301C Cut end surface of cut-and-processed product
302 Side surface
302A Sag surface
302B Shear surface
306 Fracture surface

The disclosure of Japanese Patent Application No. 2022-157062 is herein incorporated by reference in its entirety.

All literature, patent applications, and technical standards described herein are herein incorporated by reference, as if each individual literature, patent application, and technical standard were specifically and individually indicated to be incorporated by reference.

## Claims

1. A cut-and-processed product of a Zn-Al-Mg-based plated steel material comprising a base steel material and a Zn-Al-Mg-based plated layer covering a surface of the base steel material, wherein:
a cut end surface of the cut-and-processed product is covered with the Zn-Al-Mg-based plating layer at a coverage of from 50 to 99% with respect to the cut end surface,
a non-plated surface of the base steel material and the Zn-Al-Mg-based plating layer around the non-plated surface, in the cut end surface of the cut-and-processed product, are covered with a repair coat,
an initial coat resistivity R1 is from 10 to 1000 Ω/cm², and a coat resistivity R2 after immersion of the cut-and-processed product in 5% by mass salt water for 3 hours is from 5 to 50 Ω/cm², in the repair coat, and
a thickness of the repair coat is 10 µm or more.

2. The cut-and-processed product according to claim 1, wherein the repair coat comprises a Zn-based metal powder and a binder resin.

3. The cut-and-processed product according to claim 1, wherein:
the cut end surface of the cut-and-processed product has:
a first inclined surface that comprises a first sag surface continued from a first surface of the cut-and-processed product and a first shear surface continued from the first sag surface, and that is inclined from the first surface of the cut-and-processed product toward a center in a sheet thickness direction,
a second inclined surface that comprises a second sag surface continued from a second surface of the cut-and-processed product and a second shear surface continued from the second sag surface, and that is inclined from the second surface of the cut-and-processed product toward the center in the sheet thickness direction, and
a fracture surface formed between the first inclined surface and the second inclined surface,
at least one portion of the base steel material located on the first inclined surface and the second inclined surface, in the cut end surface of the cut-and-processed product, is covered with the Zn-Al-Mg-based plating layer, and
a non-plated surface of the base steel material comprising the fracture surface and the Zn-Al-Mg-based plating layer around the non-plated surface, in the cut end surface of the cut-and-processed product, are covered with the repair coat.

4. The cut-and-processed product according to claim 1, wherein:
the cut end surface of the cut-and-processed product has:
a side surface that comprises a sag surface continued from a first surface of the cut-and-processed product and a shear surface continued from the sag surface, and that is inclined along a sheet thickness direction or from the first surface of the cut-and-processed product toward a center, and
a fracture surface that is continued from the side surface and reaches a second surface of the cut-and-processed product,
at least one portion of the base steel material located on the side surface, in the cut end surface of the cut-and-processed product, is covered with the Zn-Al-Mg-based plating layer, and
a non-plated surface of the base steel material comprising the fracture surface and the Zn-Al-Mg-based plating layer around the non-plated surface, in the cut end surface of the cut-and-processed product, are covered with the repair coat.

5. The cut-and-processed product according to claim 1, wherein the initial coat resistivity R1 in the repair coat is from 300 to 500 Ω/cm².

6. The cut-and-processed product according to claim 1, wherein the coat resistivity R2 after immersion in the repair coat is from 10 to 45 Ω/cm².

7. The cut-and-processed product according to claim 2, wherein the Zn-based metal powder comprises Zn and Al.

8. The cut-and-processed product according to claim 7, wherein a content of Al with respect to Zn in the Zn-based metal powder comprising Zn and Al is from 20 to 45% by mass.

9. The cut-and-processed product according to claim 7, wherein a content of Al with respect to Zn in the Zn-based metal powder comprising Zn and Al is from 28 to 34% by mass.

10. The cut-and-processed product according to claim 2, wherein a content ratio of the Zn-based metal powder with respect to the entire repair coat is from 60 to 80% by mass the metal powder.

11. The cut-and-processed product according to claim 2, wherein the binder resin is at least one selected from the group consisting of a polystyrene resin and an epoxy resin.

12. A guardrail comprising the cut-and-processed product according to any one of claim 1 to claim 11.
